# EUROPEAN PATENT SPECIFICATION

(11) **EP 3 651 226 B1**
(45) Date of publication and mention of the grant of the patent: **29.09.2021**
(21) Application number: 19157576.0
(22) Date of filing: 15.02.2019
(51) Int. Cl.: H01M 10/04, H01M 50/116

(54) **POUCH FORMING METHOD AND POUCH FORMING DEVICE**
BEUTELHERSTELLUNGSVERFAHREN UND BEUTELHERSTELLUNGSVORRICHTUNG
PROCÉDÉ ET DISPOSITIF DE FORMATION DE SACHETS

(30) Priority: 09.11.2018 KR 20180137484; 25.01.2019 KR 20190010004
(43) Date of publication of application: 13.05.2020
(60) Divisional application: 20209936.2
(73) Proprietor: LG CHEM, LTD., Yeongdeungpo-gu, Seoul 07336 (KR)
(72) Inventor: KIM, Gee Hwan, 34122 DAEJEON (KR); LEE, Sang Don, 34122 DAEJEON (KR); CHOI, Min Seung, 34122 DAEJEON (KR); YEO, Sang Uk, 34122 DAEJEON (KR)
(74) Representative: Plasseraud IP

(56) References cited:
- KR-A- 20140 104 538
- US-A1- 2013 252 081
- US-A1- 2014 304 980
- US-A1- 2014 308 577

## Description

### Field of the Invention

The present invention relates to a pouch forming method.

### Description of the Related Art

Secondary batteries are rechargeable unlike primarily batteries, and also, the possibility of compact size and high capacity is high. Thus, recently, many studies on rechargeable batteries are being carried out. As technology development and demands for mobile devices increase, the demands for rechargeable batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

The electrode assembly may be approximately classified into a jelly-roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length.

Recently, the pouch-type battery in which a stack/folding type electrode assembly is built in a pouch-type battery case provided as an aluminum lamination sheet is attracting much attention due to its low manufacturing cost, small weight, easy shape deformation, and the like, and thus, its usage is gradually increasing.

However, in the process of forming the accommodation part in a pouch sheet accommodating the electrode assembly so as to manufacture the secondary battery, a large amount of cracks occur in a portion at which the pouch sheet is formed.

### [Prior Art Document]

### [Patent Document]

Korean Patent Publication No. 10-2014-0015647

US 2014/308577, US 2014/304980 KR 2014 0104538 and US 2013/252081 disclose a battery case for secondary batteries.

### SUMMARY OF THE INVENTION

One aspect of the prevent invention is to provide a pouch forming method, which are capable of preventing cracks from occurring when an accommodation part accommodating an electrode assembly is formed in a pouch sheet.

According to another aspect of the present invention, there is provided a pouch forming method for forming an accommodation part accommodating an electrode assembly in a pouch sheet, the pouch forming method comprising: a seating process of seating the pouch sheet on a top surface of a lower die in which a forming groove is formed in an upper portion thereof; a vacuum elongation process of elongating a lower portion of the pouch sheet, in which the accommodation part is formed, through vacuum; and an accommodation part formation process of pressing the portion of the pouch sheet, which is elongated through the vacuum, by using a punch disposed above the pouch sheet in a direction in which the forming groove is formed to form the accommodation part.

In the vacuum elongation process, a space of the forming groove may be vacuumized through a vacuum passage connected to the forming groove in the lower die to elongate a portion of the pouch sheet, which faces the forming groove.

In the vacuum elongation process, the space of the forming groove may be vacuumized through a plurality of suction holes of the vacuum passage, which are formed along a lower portion of a side surface of the forming groove, to elongate the forming portion.

In one embodiment, the vacuum elongation process may be performed before the accommodation part formation process.

In another embodiment, the vacuum elongation process and the accommodation part formation process may be performed at the same time.

The pouch forming method of the present invention may further comprise a pouch supporting process of pressing an outer portion of the accommodation part in the pouch sheet through a stripper disposed on an upper portion of the pouch sheet to support the pouch sheet on the lower die.

The pouch forming method of the present invention further comprises a control process of controlling a stripper moving part, which allows the stripper to vertically move, through a control unit, wherein, in the control process, when the punch is inserted into the forming groove of the lower die to press the pouch sheet, the stripper allows the stripper moving part to ascend so as to decrease in pressing force that presses the pouch sheet.

In the control process, the stripper moving part and a punch moving part, which allows the punch to vertically move, may be controlled so that the stripper gradually ascends, and simultaneously, the punch gradually decreases in descending speed.

According to another aspect of the present disclosure, there is disclosed a pouch forming device for forming an accommodation part accommodating an electrode assembly in a pouch sheet, the pouch forming device comprising: a lower die having a top surface and an upper portion in which a forming groove is formed, the top surface being adapted to seat a pouch sheet; a punch unit disposed above the lower die and comprising a punch, said punch having an end that is disposed at a position facing the forming groove of the lower die and that has a shape corresponding to the shape of the forming groove; and a vacuum unit connected to the forming groove of the lower die.

A vacuum passage serving as a passage connecting the forming groove to the vacuum unit may be further formed in the lower die.

A suction hole of the vacuum passage connected to the forming groove may be provided in a lower portion of a side surface of the forming groove.

The suction hole of the vacuum passage may be provided in plurality along the lower portion of the side surface of the forming groove.

The vacuum passage may have a shape that gradually decreases in diameter toward the suction hole.

The vacuum unit may comprise a vacuum pump.

The disclosed pouch forming device may further comprise a stripper unit comprising: a stripper disposed above the lower die and a stripper moving part allowing the stripper to vertically move.

The disclosed pouch forming device may further comprise a control unit adjusting pressing of the stripper, wherein, when the punch is inserted into the forming groove of the lower die, the control unit controls the stripper moving part to allow the stripper to ascend.

The punch unit may further comprise a punch moving part allowing the punch to vertically move, wherein the punch moving part allows the punch to descend, and the control unit may control the punch moving part and the stripper moving part so that the stripper gradually ascends, and simultaneously, the punch gradually decreases in descending speed.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is an exploded perspective view of a secondary battery to which a pouch sheet formed through a pouch forming method is applied according to a first embodiment of the present invention;
FIG. 2 is a cross-sectional view illustrating an example of a seating process in the pouch forming method according to the first embodiment of the present invention;
FIG. 3 is a cross-sectional view illustrating an example of a pouch supporting process in the pouch forming method according to the first embodiment of the present invention;
FIG. 4 is a cross-sectional view illustrating a vacuum elongation process in the pouch forming method according to the first embodiment of the present invention;
FIG. 5 is a cross-sectional view illustrating an example of a state in which the pouch sheet is elongated through the vacuum elongation process in the pouch forming method according to the first embodiment of the present invention;
FIG. 6 is a cross-sectional view illustrating an example of an accommodation part formation process in the pouch forming method according to the first embodiment of the present invention;
FIG. 7 is a cross-sectional view illustrating an example of a state in which an accommodation part is formed in the pouch sheet through the accommodation part formation process in the pouch forming method according to the first embodiment of the present invention;
FIG. 8 is a cross-sectional view illustrating a vacuum elongation process in a pouch forming method according to a second embodiment of the present invention;
FIG. 9 is a cross-sectional view illustrating an example of a state in which a pouch sheet is elongated through the vacuum elongation process in the pouch forming method according to the second embodiment of the present invention;
FIG. 10 is a cross-sectional view illustrating an example of a state in which an accommodation part is formed in the pouch sheet through the vacuum elongation process and an accommodation part formation process in the pouch forming method according to the second embodiment of the present invention;
FIG. 11 is a cross-sectional view illustrating an example of a state in which the accommodation part is formed after the vacuum elongation process and the accommodation part formation process in the pouch forming method according to the second embodiment of the present invention;
FIG. 12 is an exploded perspective view illustrating an example of a pouch forming device used in a pouch forming method according to the present invention;
FIG. 13 is a cross-sectional view illustrating an example of a state in which the pouch sheet is elongated through the vacuum elongation process in the pouch forming method according to the present invention;
FIG. 14 is a cross-sectional view illustrating an example of an accommodation part formation process in the pouch forming method according to the present invention;
FIG. 15 is a cross-sectional view illustrating an example of a state in which an accommodation part is formed in the pouch sheet through the accommodation part formation process in the pouch forming method according to the present invention;
FIG. 16 is a graph illustrating a relationship between pressing force and a forming depth of a stripper in the pouch forming method according to the present invention;
FIG. 17 is a graph illustrating a relationship between a descending speed and a forming depth of a punch in the pouch forming method according to the present invention;
FIG. 18 is a table showing results obtained through Experimental Example 1 in a pouch forming device according to an embodiment not part of the present invention; and
FIG. 19 is a table showing results obtained through Experimental Example 2 in a pouch forming device according to another embodiment not part of the present invention.

### DETAILED DESCRIPTION OF THE PREFERRED EMBODIMENT

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

In the present disclosure, the words "upper", "top", "lower", "bottom", "below" and "above" are used to describe components of the devices according to the invention and as such are to be considered with reference to the devices in their operating position.

Further, in the present disclosure, the words "vertical" and "vertically" relates to the upper-lower axis.

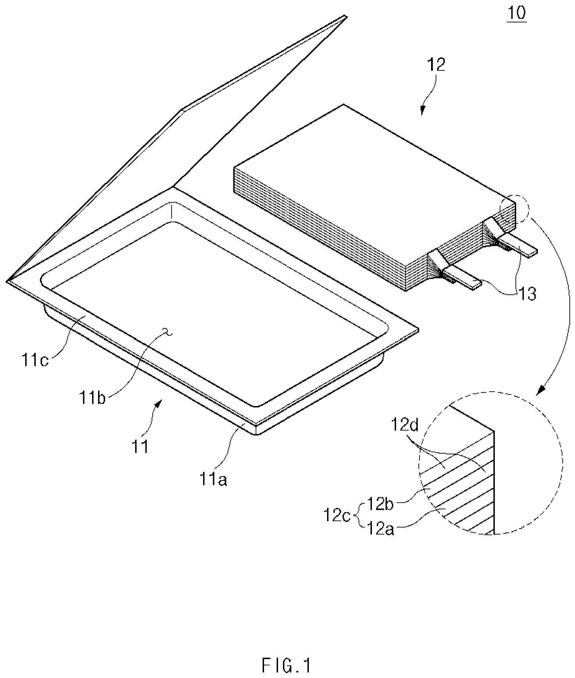

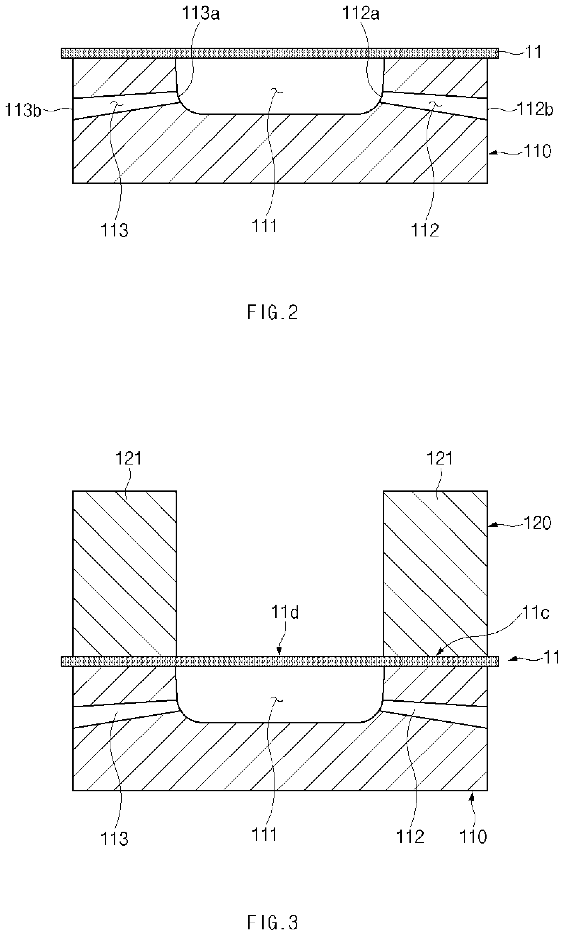

FIG. 1 is an exploded perspective view of a secondary battery to which a pouch sheet formed through a pouch forming method is applied according to a first embodiment of the present invention, FIG. 2 is a cross-sectional view illustrating an example of a seating process in the pouch forming method according to the first embodiment of the present invention, and FIG. 3 is a cross-sectional view illustrating an example of a pouch supporting process in the pouch forming method according to the first embodiment of the present invention.

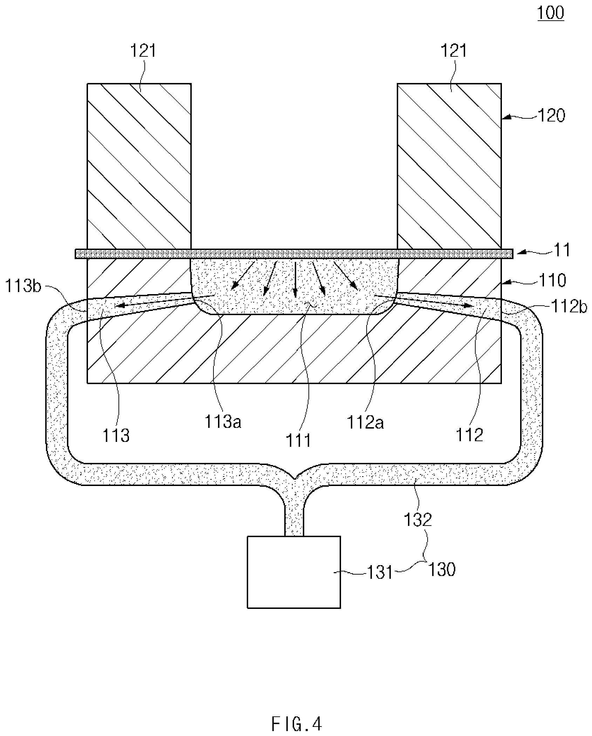

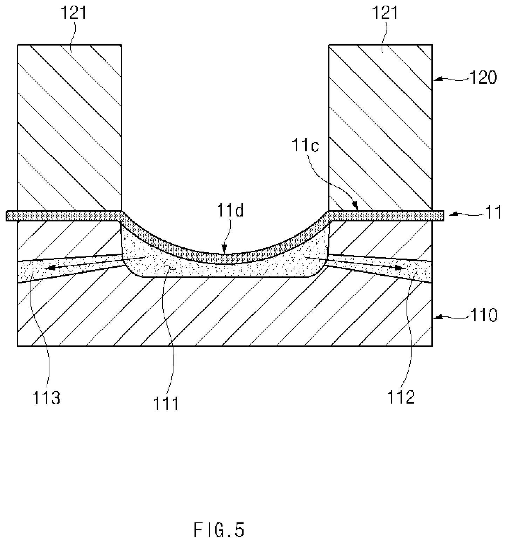

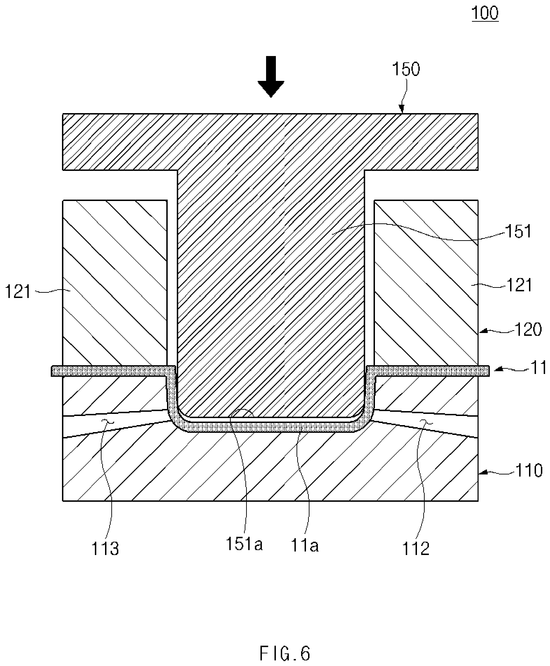

FIG. 4 is a cross-sectional view illustrating a vacuum elongation process in the pouch forming method according to the first embodiment of the present invention, FIG. 5 is a cross-sectional view illustrating an example of a state in which the pouch sheet is elongated through the vacuum elongation process in the pouch forming method according to the first embodiment of the present invention, and FIG. 6 is a cross-sectional view illustrating an example of an accommodation part formation process in the pouch forming method according to the first embodiment of the present invention.

Referring to FIGS. 1 to 5, a pouch forming method for forming an accommodation part 11b accommodating an electrode assembly 12 in a pouch sheet 11 according to a first embodiment of the present invention comprises a seating process of seating the pouch sheet 11 on a lower die 110 in which a forming groove 111 is formed, a vacuum elongation process of elongating a portion of the pouch sheet 11, in which the accommodation part 11b is formed, through vacuum, and an accommodation part formation process of pressing the portion of the pouch sheet, which is elongated through the vacuum, by using a punch 151 to form the accommodation part 11b. Also, the pouch forming method according to the first embodiment of the present invention may further comprise a pouch supporting process supporting the pouch sheet 11 on the lower die 110 before the vacuum elongation process is performed.

Hereinafter, the pouch forming method according to the first embodiment of the present invention will be described in more detail with reference to FIGS. 1 to 7.

Referring to FIG. 2, in the seating process, the pouch sheet 11 may be seated on a top surface of the lower die 110 in which a forming groove 111 is formed in an upper portion thereof. Here, the pouch sheet 11 may cover an upper portion of the forming groove 111 of the lower die to seal the forming groove 111.

Also, the pouch sheet 11 may be provided as, for example, a sheet made of aluminum (Al).

Referring to FIG. 3, in the pouch supporting process, before the vacuum elongation process is performed, an outer portion 11c of the accommodation part 11b in the pouch sheet 11 may be pressed through a stripper 121 disposed above the pouch sheet 11 to support the pouch sheet 11 to the lower die 110 so that the pouch sheet 11 is fixed. Here, a stripper unit 120 comprising the stripper 121 and a stripper moving part allowing the stripper 121 to move may be provided (see FIG. 1).

Thus, when the accommodation part 11 is formed by pressing the pouch sheet 11 through an accommodation part formation process that will be described below, the pouch sheet 11 may be prevented from moving.

Referring to FIGS. 1, 4, and 5, in the vacuum elongation process, the lower portion of the pouch sheet 11, in which the accommodation part 11b is formed, may be elongated through vacuum.

Also, in the vacuum elongation process, a space of the forming groove 111 may be vacuumized through vacuum passages 112 and 113 connected to the forming groove 111 in the lower die 110 to elongate a portion of the pouch sheet 11, which faces the forming groove 111.

Furthermore, in the vacuum elongation process, the space of the forming groove 111 may be vacuumized through suction holes 112a and 113a of the vacuum passages 112 and 113 formed in plurality along a lower portion of a side surface of the forming groove 111 to elongate a forming portion 11d of the pouch sheet 11. Here, in the vacuum elongation process, for example, the space of the forming groove 111 may be vacuumized through a vacuum unit 130 for 0.1 seconds to 0.2 seconds.

When the vacuum elongation process is performed before the accommodation part formation process, elongation efficiency may be improved. That is, in the vacuum elongation process, when the pouch sheet 11 is elongated through the vacuum, the elongation efficiency may be improved compared to a case in which the pouch sheet 11 is elongated through the vacuum during the accommodation part formation process.

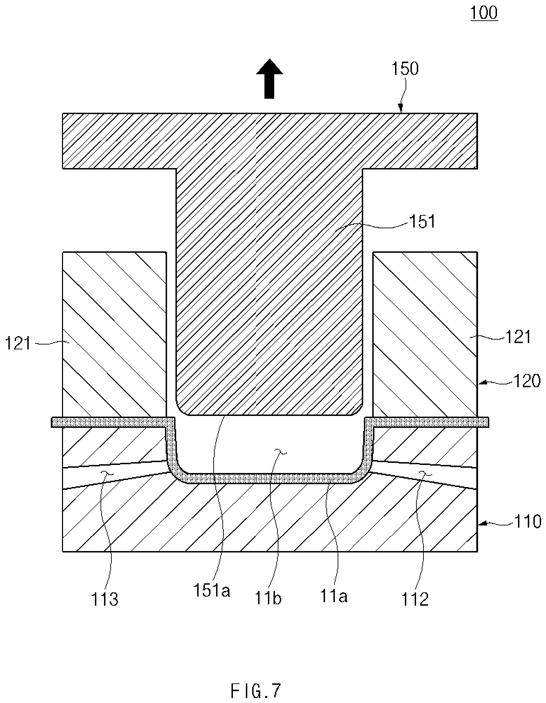

FIG. 7 is a cross-sectional view illustrating an example of a state in which an accommodation part is formed in the pouch sheet through the accommodation part formation process in the pouch forming method according to the first embodiment of the present invention.

Referring to FIGS. 6 and 7, in the accommodation part formation process, the portion of the pouch sheet 11, which is elongated through the vacuum, may be pressed by a punch 151 disposed above the pouch sheet 11 in a direction, in which the forming groove 111 is formed, to form the accommodation part 11b. Here, the pouch sheet 11 may have a body 11a having a shape that is convex downward by the punch 151. Here, a punch unit 150 comprising the punch 151 and the punch moving part allowing the punch 151 to move may be provided.

Also, in the accommodation part formation process, the pouch sheet 11 may be pressed by the punch 151 so that the accommodation part 11b has a depth, for example, 7 mm to 8 mm in the pouch sheet 11.

Referring to FIGS. 4 to 7, in the above-described pouch forming method according to the first embodiment of the present invention, the forming portion 11d in which the accommodation part is formed may be elongated through the vacuum before the accommodation part 11b is formed in the pouch sheet 11. Thus, when the punch 151 is pressed to form the pouch sheet 11, occurrence of cracks in the forming portion may be prevented.

Hereinafter, a pouch forming method according to a second embodiment of the present invention will be described.

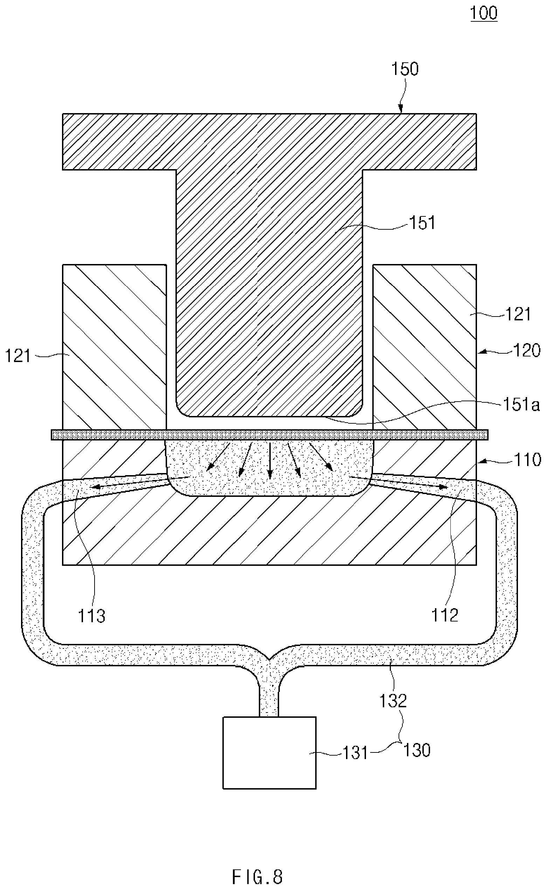

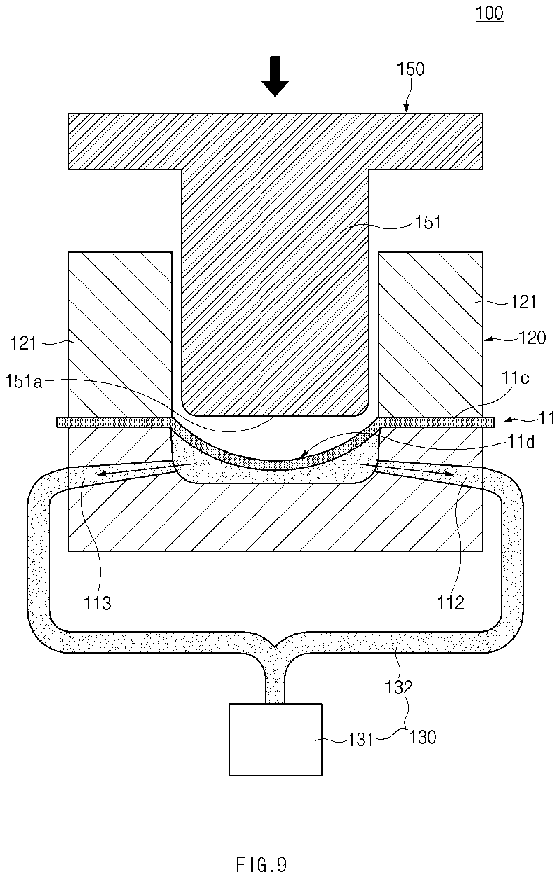

FIG. 8 is a cross-sectional view illustrating a vacuum elongation process in a pouch forming method according to a second embodiment of the present invention, and FIG. 9 is a cross-sectional view illustrating an example of a state in which a pouch sheet is elongated through the vacuum elongation process in the pouch forming method according to the second embodiment of the present invention.

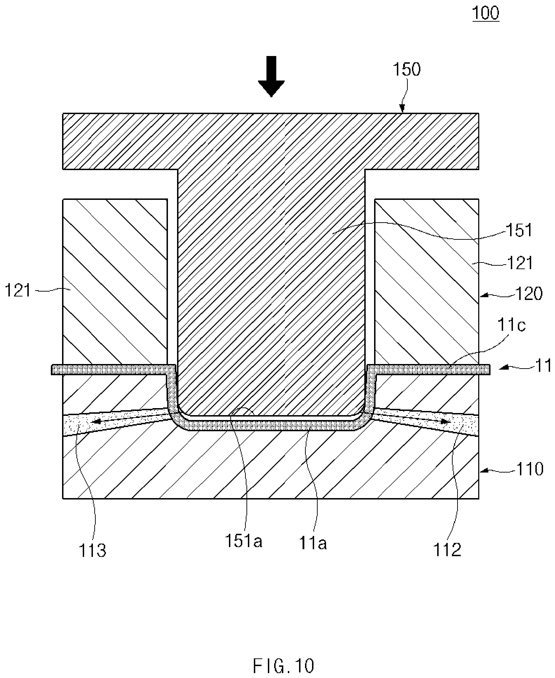

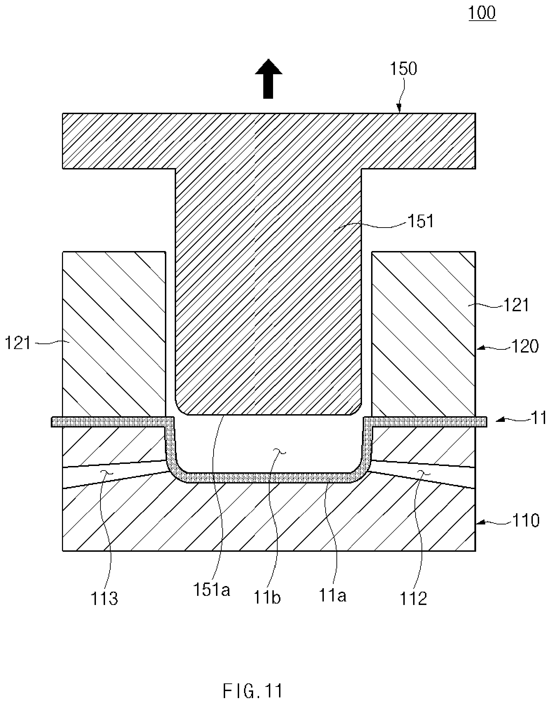

FIG. 10 is a cross-sectional view illustrating an example of a state in which an accommodation part is formed in the pouch sheet through the vacuum elongation process and an accommodation part formation process in the pouch forming method according to the second embodiment of the present invention, and FIG. 11 is a cross-sectional view illustrating an example of a state in which the accommodation part is formed after the vacuum elongation process and the accommodation part formation process in the pouch forming method according to the second embodiment of the present invention.

Referring to FIGS. 8 to 11, a pouch forming method for forming an accommodation part 11b accommodating an electrode assembly in a pouch sheet 11 according to a first embodiment of the present invention comprises a seating process of seating the pouch sheet 11 on a lower die 110 in which a forming groove 111 is formed, a pouch supporting process of supporting the pouch sheet 11 on the lower die 110, a vacuum elongation process of elongating a portion of the pouch sheet 11, in which the accommodation part 11b is formed, through vacuum, and an accommodation part formation process of pressing the portion of the pouch sheet, which is elongated through the vacuum, by using a punch 151 to form the accommodation part 11b. Here, the vacuum elongation process and the accommodation part formation process may be performed at the same time.

The pouch forming method according to the second embodiment of the present invention is different from the pouch forming method according to the foregoing first embodiment of the present invention in that the vacuum elongation process and the accommodation part formation process are performed at the same time. Thus, contents of this embodiment, which are duplicated with those according to the foregoing first embodiment, will be briefly described, and also, differences therebetween will be mainly described.

In more detail, in the vacuum elongation process of the pouch forming method according to the second embodiment of the present invention, a lower portion of the pouch sheet 11, in which the accommodation part 11b is formed, may be elongated through vacuum. Also, in the vacuum elongation process, a space of the forming groove 111 may be vacuumized through vacuum passages 112 and 113 connected to the forming groove 111 in the lower die 110 to elongate a portion of the pouch sheet 11, which faces the forming groove 111.

Also, in the accommodation part formation process, the portion of the pouch sheet 11, which is elongated through the vacuum, may be pressed by a punch 151 disposed above the pouch sheet 11 in a direction, in which the forming groove 111 is formed, to form the accommodation part 11b.

Here, in the pouch forming method according to the second embodiment of the present invention, the vacuum elongation process and the accommodation part formation process may be performed at the same time.

That is, in the pouch forming method according to the second embodiment of the present invention, the vacuum may be applied to press the pouch sheet by the punch while elongating the pouch sheet 11, thereby forming the accommodation part 11b.

Thus, the vacuum elongation process and the accommodation part formation process may be performed at the same time to reduce a manufacturing time.

Hereinafter, a pouch forming method according to the present invention will be described.

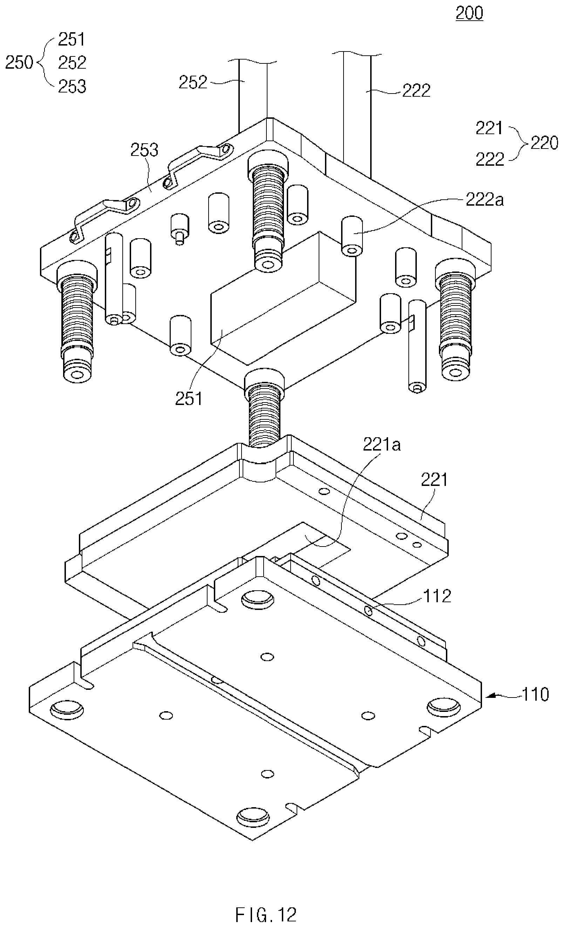

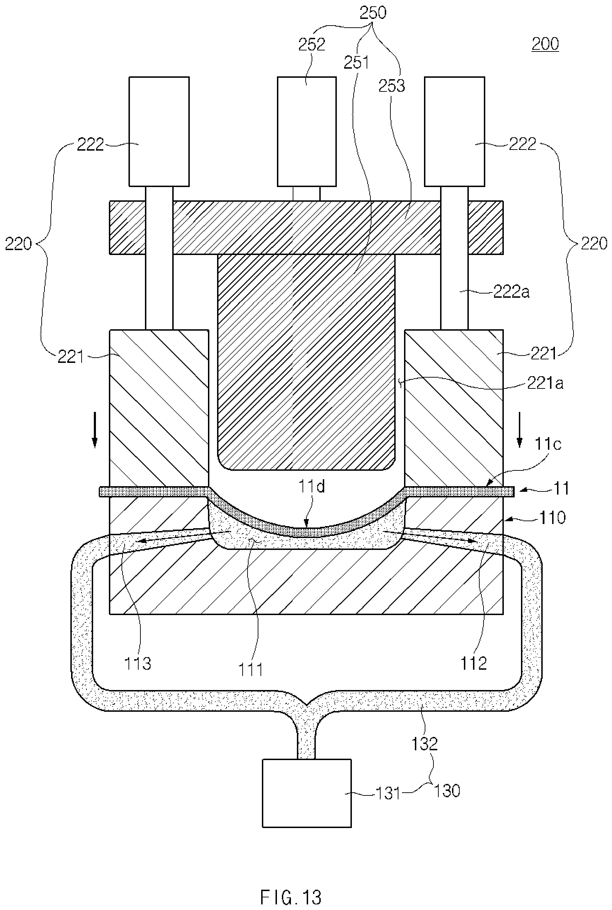

FIG. 12 is an exploded perspective view illustrating an example of a pouch forming device used in a pouch forming method according to the present invention, and FIG. 13 is a cross-sectional view illustrating an example of a state in which the pouch sheet is elongated through the vacuum elongation process in the pouch forming method according to the present invention.

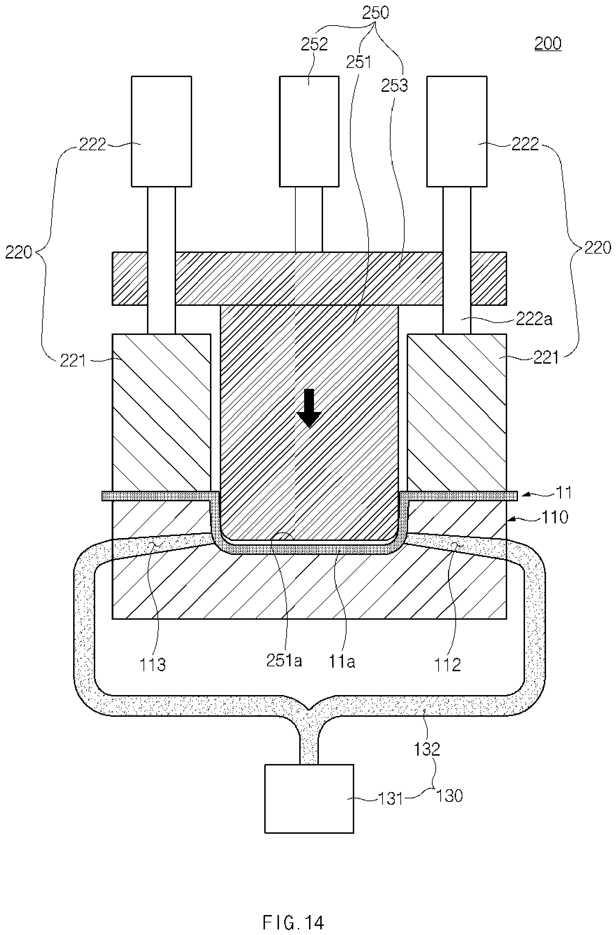

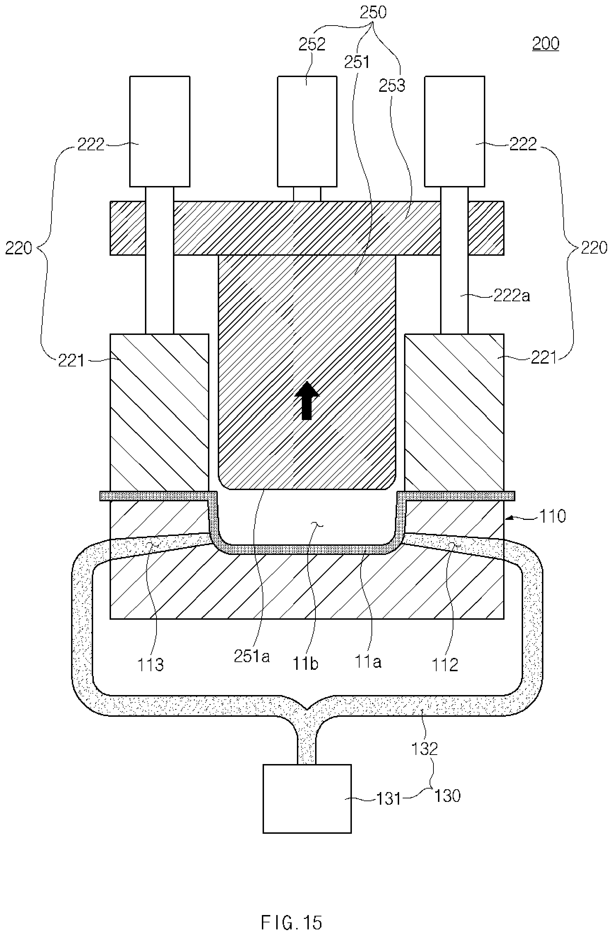

FIG. 14 is a cross-sectional view illustrating an example of an accommodation part formation process in the pouch forming method according to the present invention, and FIG. 15 is a cross-sectional view illustrating an example of a state in which an accommodation part is formed in the pouch sheet through the accommodation part formation process in the pouch forming method according to the present invention;

Referring to FIGS. 12 to 15, a pouch forming method for forming an accommodation part 11b accommodating an electrode assembly in a pouch sheet 11 according to a first embodiment of the present invention comprises a seating process of seating the pouch sheet 11 on a lower die 110 in which a forming groove 111 is formed, a pouch supporting process of supporting the pouch sheet 11 on the lower die 110 through a stripper 221, a vacuum elongation process of elongating a portion of the pouch sheet 11, in which the accommodation part 11b is formed, through vacuum, an accommodation part formation process of pressing the portion of the pouch sheet, which is elongated through the vacuum, by using a punch 251 to form the accommodation part 11b, and a control process of controlling vertical movement of the stripper 221.

The pouch forming method according to of the present invention is different from the pouch forming method according to the foregoing first embodiment of the present invention and the pouch forming method according to the foregoing second embodiment of the present invention in that the control process is further performed. Thus, contents of the pouch forming method according to of the present invention, which are duplicated with those according to the forgoing embodiments, will be omitted or briefly described, and also, differences therebetween will be mainly described.

In more detail, referring to FIGS. 1 and 13, in the pouch supporting process of the pouch forming method according to the present invention, an outer portion 11c of the accommodation part 11b in the pouch sheet 11 may be pressed through the stripper 221 disposed above the pouch sheet 11 so as to be supported on the lower die 110. Here, in the pouch supporting process, the outer portion 11c of the pouch sheet 11 may be pressed through the stripper 221 so that the outer portion 11c of pouch sheet 11 is supported to be fixed. Thereafter, when pressing force of the stripper 221 may be adjusted through the control process to allow the punch 251 to press the pouch sheet 11, the position of the outer portion 11c of the pouch sheet 11 may move.

In the vacuum elongation process, a lower portion of the pouch sheet 11, in which the accommodation part 11b is formed, may be elongated through vacuum. Also, in the vacuum elongation process, a space of the forming groove 111 may be vacuumized through vacuum passages 112 and 113 connected to the forming groove 111 in the lower die 110 to elongate a portion of the pouch sheet 11, which faces the forming groove 111.

Referring to FIGS. 14 and 15, in the accommodation part formation process, the portion of the pouch sheet 11, which is elongated through the vacuum, may be pressed by a punch 251 disposed above the pouch sheet 11 in a direction, in which the forming groove 111 is formed, to form the accommodation part 11b.

In the control process, a stripper moving part 222 for allow the stripper 221 to vertically move is controlled through a control unit (not shown).

Also, in the control process, when the punch 251 is inserted into the forming groove 111 of the lower die 110 to press the pouch sheet 11, the stripper moving part 222 ascends to reduce the pressing force of the stripper 221 for pressing the pouch sheet.

Furthermore, in the control process, the stripper moving part 222 and the punch moving part 252 allowing the punch 251 to vertically move may be controlled, and thus, the stripper 221 may gradually ascend, and also, a descending speed of the punch 251 may be gradually reduced.

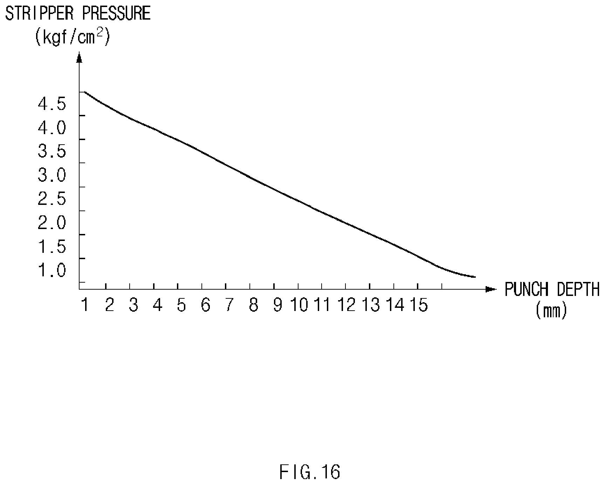

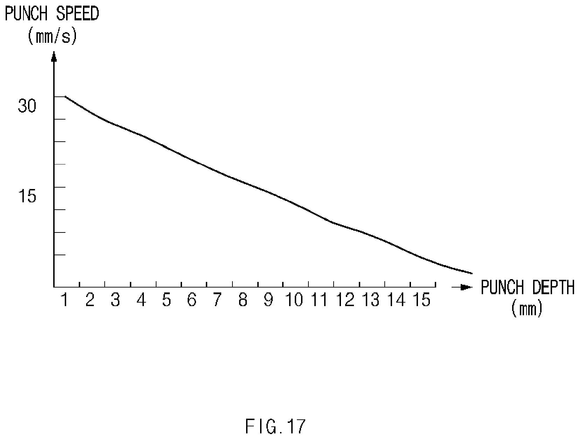

FIG. 16 is a graph illustrating a relationship between the pressing force and the forming depth of the stripper in the pouch forming method according to the present invention, and FIG. 17 is a graph illustrating a relationship between the descending speed and the forming depth of the punch in the pouch forming method according to the present invention.

As shown in the graph of FIG. 16, in the control process, the pressing force of the stripper 221 and a depth at which the punch 251 is inserted into the forming groove 111 are inversely proportional to each other. That is, as a depth of the punch 251 inserted into the forming groove 111 increases, the pressing force of the stripper 221 may gradually decrease to expand an elongation area of the pouch sheet 11. As a result, a local elongation of the pouch may increase to prevent the cracks from occurring. (see FIGS. 13 and 14)

Also, as illustrated in FIG. 17, in the control process, the descending speed of the punch 251 and the depth of the punch 251 inserted into the forming groove 111 are inversely proportional to each other. That is, as the depth of the punch 251 inserted into the forming groove 111 increases, the descending speed, i.e., the pressing force of the punch 251 may gradually decrease to expand an elongation area of the pouch sheet 11. As a result, a local elongation of the pouch sheet 11 may increase to prevent the cracks from occurring. (see 13 and 14)

Thus, referring to FIGS. 14 and 15, in the pouch forming method according to the present invention, when the pouch sheet 11 is formed, the elongation may gradually increase to form the accommodation part 11b accommodating the electrode assembly in the pouch sheet 11 without the occurrence of the cracks, thereby manufacturing the pouch having the high quality. Here, referring to FIG. 13, the forming portion 11d of the pouch sheet 11, in which the accommodation part 11b is formed, may be elongated through the vacuum and then pressed by using the punch 151 to form the pouch sheet 11, the occurrence of the cracks in the forming portion may be more effectively prevented. (see FIG. 1)

Referring to FIGS. 1, 2, and 4, a pouch forming device 100 according to the embodiment not part of the present invention comprises a lower die 110 which is disposed below a pouch sheet 11 and in which a forming groove 11 is formed in an upper portion thereof, a punch unit 150 comprising a punch 151 that presses the pouch sheet 11 to form an accommodation part 11b having a shape corresponding to the forming groove 111 in the pouch sheet 11, and a vacuum unit 130 applying vacuum to the pouch sheet 11 to elongate a forming portion 11d of the pouch sheet 11. Also, the pouch forming device 100 according to the embodiment not part of the present invention may further comprise a stripper unit 120 supporting the pouch sheet 11 on the lower die 110.

The pouch forming device 100 according to the embodiment not part of the present invention relates to a device for forming the pouch sheet 11, which is applied to the pouch forming method according to the foregoing first embodiment of the present invention and the pouch forming method according to the foregoing second embodiment of the present invention. Thus, in this embodiment, contents duplicated with those according to the foregoing embodiments will be briefly described, and differences therebetween will be mainly described.

In more detail, in the pouch forming device 100 according to the embodiment not part of the present invention, the accommodation part 11b accommodating the electrode assembly 12 may be formed in the pouch sheet 11.

Here, the electrode assembly 12 may be a chargeable and dischargeable power generation element and have a structure in which an electrode 12c and a separator 12d are combined and alternately stacked. The electrode assembly 12 may be accommodated in the pouch sheet 11 to constitute a secondary battery 10. Also, in the secondary battery 10, an electrode lead 13 connected to the electrode 12c of the electrode assembly 12 so as to be electrically connected to an external device may be further provided.

The electrode 12c may comprise a positive electrode 12a and a negative electrode 12b. Also, the separator 12d may separate the positive electrode 12a from the negative electrode 12b to electrically insulate the positive electrode 12a from the negative electrode 12b.

The positive electrode 12a may comprise a positive electrode collector (not shown) and a positive electrode active material (not shown) applied to the positive electrode collector, and the negative electrode 12b may comprise a negative electrode collector (not shown) and a negative electrode active material (not shown) applied to the negative electrode collector.

For example, the positive electrode collector may be provided as foil made of an aluminum (Al) material.

The positive electrode active material may comprise, for example, lithium manganese oxide, lithium cobalt oxide, lithium nickel oxide, lithium iron phosphate, or a compound containing at least one of these and mixtures thereof.

For example, the negative electrode collector may be provided as foil made of a copper (Cu) or nickel (Ni) material.

The negative electrode active material may comprise synthetic graphite, lithium a metal, a lithium alloy, carbon, petroleum coke, activated carbon, graphite, a silicon compound, a tin compound, a titanium compound, or an alloy thereof.

The separator 12d is made of an insulation material is alternatively stacked with the positive electrode 12a and the negative electrode 12b. Here, the separator 12d may be disposed between the positive electrode 12a and the negative electrode 12b and also disposed on an outer surface of each of the positive electrode 12a and the negative electrode 12b. Also, the separator 12d may be made of, for example, a polyolefin-based resin film such as polyethylene or polypropylene having micropores.

The lower die 110 may be disposed below the pouch sheet 11, and a forming groove 111 may be formed in an upper portion of the lower die 110.

Also, vacuum passages 112 and 113 serving as passage through which the forming groove 111 and the vacuum unit 130 are connected to each other may be formed in the lower die 110.

Suction holes 112a and 113a of the vacuum passages 112 and 113 may be connected to the forming groove 111 and disposed in a lower portion of a side surface of the forming groove 111. Thus, a forming portion of a corner of a body 11a, at which deformation of the pouch sheet 11 largely occurs may be effectively elongated. That is, the suction holes 112a and 113a of the vacuum passages 112 and 113 may be formed in the lower portion of the side surface of the forming groove 111, which faces a portion at which the corner is formed on the body 11a of the pouch sheet 11. Thus, when the corner of the body 11a of the pouch sheet 11 is formed, an adjacent portion may be sufficient elongated to deeply form the accommodation part 11b without an occurrence of cracks in the corner.

Also, the suction holes 112a and 113a of the vacuum passages 112 and 113 may be provided in plurality along the lower portion of the side surface of the forming groove 111.

Each of the vacuum passages 112 and 113 formed in the lower die 110 may have one side connected to the forming groove 111 and the other side connected to the vacuum unit 130. Here, each of the circular suction holes 112a and 113a may be formed in the one side of each of the vacuum passages 112 and 113, and each of circular connection holes 112b and 113b may be formed in the other side of each of the vacuum passages 112 and 113. Here, each of the vacuum passages 112 and 113 may have a shape that gradually decreases in diameter toward each of the suction holes 112a and 113a. That is, each of the vacuum passages 112 and 113 may form a circular passage and have a shape that gradually decreases in diameter from the other side to one side thereof. Thus, vacuum suction force in the vicinity of the suction holes 112a and 113a of the vacuum passages 112 and 113 may increase, and thus, the elongation of the pouch sheet 11 may increase.

A stripper 121 may be disposed above the pouch sheet 11 to press an outer portion 11c of the accommodation part 11 in the pouch sheet 11 so that the pouch sheet 11 is fixed to the lower die 110. Here, a stripper unit 120 comprising the stripper 121 and a stripper moving part allowing the stripper 121 to move may be provided.

A lower end of the stripper 121 may press the pouch sheet 11 to allow the outer portion 11c of the pouch sheet 11 to be engaged with the lower die 110, thereby preventing the pouch sheet 11 from moving when the portion of the pouch sheet 11, in which the accommodation part 11b is formed, is pressed through the punch 151.

The punch 151 may be disposed above the pouch sheet 11 to press the pouch sheet 11 in a direction of the forming groove 111 of the lower die 110, thereby forming the accommodation part 11bin a shape corresponding to the forming groove 111 in the pouch sheet 11. Here, a punch unit 150 comprising the punch 151 and the punch moving part allowing the punch 151 to move may be provided.

An end 151a of the punch 151 may be disposed at a position facing the forming groove 111 of the lower die 110. The end 151a of the punch 151 may be inserted into the forming groove 111 of the lower die 110 to press the pouch sheet 11, thereby forming the accommodation part 11b.

Also, the end 151a of the punch 151 may have a width less than that of the forming groove 111 of the lower die 110. For example, a portion of the punch 151, which is inserted into the forming groove 111 of the lower die 110 and an inner surface of the forming groove 111 of the lower die 110 may be spaced a thickness of the pouch sheet 11 from each other.

The vacuum unit 130 may be connected to the forming groove 111 of the lower die 110 to apply vacuum to the pouch sheet 11 seated on a top surface of the lower die 110, thereby elongating the forming portion 11d of the pouch sheet 11.

Also, the vacuum unit 130 may comprise a vacuum pump 131. The vacuum unit 130 may further comprise a vacuum tube 132 which connects the vacuum pump 131 to the vacuum passages 112 and 113 of the lower die 110. Here, a space of the forming groove 111 of the lower die 110 may be connected to the vacuum pump 131 through the vacuum passages 112 and 131 and the vacuum tube 132 so that the space of the forming groove 111 of the lower die 110 is vacuumized through the vacuum pump 131. Thus, a portion of the pouch sheet 111, which covers the space of the forming groove 111 of the lower die 110, may be elongated. As a result, the occurrence of the cracks in the elongated pouch sheet 11 may be prevented when being pressed by the punch 151.

Referring to FIGS. 1, and 2 and 12 to 15, a pouch forming device 200 according to the other embodiment not part of the present invention comprises a lower die 110 which is disposed below a pouch sheet 11 and in which a forming groove 11 is formed in an upper portion thereof, a punch unit 250 comprising a punch 251 that presses the pouch sheet 11 to form an accommodation part 11b having a shape corresponding to the forming groove 111 in the pouch sheet 11, a vacuum unit 130 applying vacuum to the pouch sheet 11 to elongate a forming portion 11d of the pouch sheet 11, and a stripper unit 220 comprising a stripper 221 supporting the pouch sheet 11 on the lower die 110.

The pouch forming device 200 according to the other embodiment not part of the present invention relates to a device for forming the pouch sheet 11, which is applied to the pouch forming method according to the present invention. Thus, in this embodiment, contents duplicated with those according to the foregoing embodiments will be omitted or briefly described, and differences therebetween will be mainly described.

In more detail, in the pouch forming device 200 according to the other embodiment not part of the present invention, the accommodation part 11b accommodating the electrode assembly 12 may be formed in the pouch sheet 11.

The lower die 110 may be disposed below the pouch sheet 11, and a forming groove 111 may be formed in an upper portion of the lower die 110.

Also, vacuum passages 112 and 113 serving as passage through which the forming groove 111 and the vacuum unit 130 are connected to each other may be formed in the lower die 110.

Suction holes 112a and 113a of the vacuum passages 112 and 113 may be connected to the forming groove 111 and disposed in a lower portion of a side surface of the forming groove 111.

Each of the vacuum passages 112 and 113 formed in the lower die 110 may have one side connected to the forming groove 111 and the other side connected to the vacuum unit 130.

The stripper unit 220 may comprises the stripper 221 supporting the pouch sheet 11 on the lower die 110 and a stripper moving part 222 allowing the stripper 221 to vertically move.

The stripper 221 may be disposed above the pouch sheet 11 to press the outer portion 11c of the accommodation part 11 in the pouch sheet 11, thereby supporting the pouch sheet 11 on the lower die 110.

For example, the stripper 221 may have a bottom surface having a size corresponding to that of the top surface of the lower die 110. Here, a through-hole 221a vertically passing through the stripper 221 and having a size corresponding to that of the forming groove 111 of the lower die 110 may be formed in the stripper 221.

The stripper moving part 222 may allow the stripper 221 to vertically move and allow the punch 251 to descend, thereby supporting the pouch sheet 11. For example, the stripper moving part 222 may comprise a pneumatic or hydraulic actuator. Here, the stripper moving part 222 may be provided with a moving rod 222a for allowing the stripper 221 to move at a lower portion thereof.

The punch unit 250 may comprise a punch 251 forming the accommodation part 111b in the pouch sheet 11 in a shape corresponding to the forming groove 111 of the lower die 110 and a punch moving part 252 allowing the punch 251 to vertically move. Here, the punch unit 250 may further comprise a punch plate 253 connecting the punch 251 to the punch moving part 252 .

The punch 251 may be disposed above the pouch sheet 11 to press the pouch sheet 11 in the direction of the forming groove 111 of the lower die 110, thereby forming the accommodation part 11b in the pouch sheet 11 in a shape corresponding to the forming groove 111 of the lower die 110. Here, an end 251a of the punch 251 may be disposed at a position facing the forming groove 111 of the lower die 110. The end 251a of the punch 251 may be inserted into the forming groove 111 of the lower die 110 to press the pouch sheet 11, thereby forming the accommodation part 11b.

The punch moving part 252 may allow the punch 251 to vertically move, for example, descend, thereby pressing the pouch sheet 11. For example, the punch moving part 252 may comprise a pneumatic or hydraulic actuator.

The punch plate 253 may be provided as a plate that is disposed on an upper end of the punch 251 to further extend in a horizontal direction. Here, the punch moving part 252 may allow the punch plate 253 to vertically move so that the punch moves. For example, the punch 251 and the punch plate 253 may be integrally formed.

The vacuum unit 130 may be connected to the forming groove 111 of the lower die 110 to apply vacuum to the pouch sheet 11 seated on a top surface of the lower die 110, thereby elongating the forming portion 11d of the pouch sheet 11.

A control unit (not shown) may adjust pressing force of the stripper 221, which presses the pouch sheet 11.

Also, the control unit may control the stripper moving part 222 to allow the stripper 221 to ascend when the punch 251 is inserted into the forming groove 111 to press the pouch sheet 11 so that the pressing force of the stripper 221, which presses the pouch sheet 11, is reduced.

The control unit may control the punch moving part 252 and the stripper moving part 222. Here, the control unit may electrically connect the punch moving part 252 to the stripper moving part 222.

The control unit may control the punch moving part 252 so that the stripper 221 gradually ascends and simultaneously control the stripper moving part 222 so that a descending speed of the punch 251 gradually decreases.

### [Experimental Example 1]

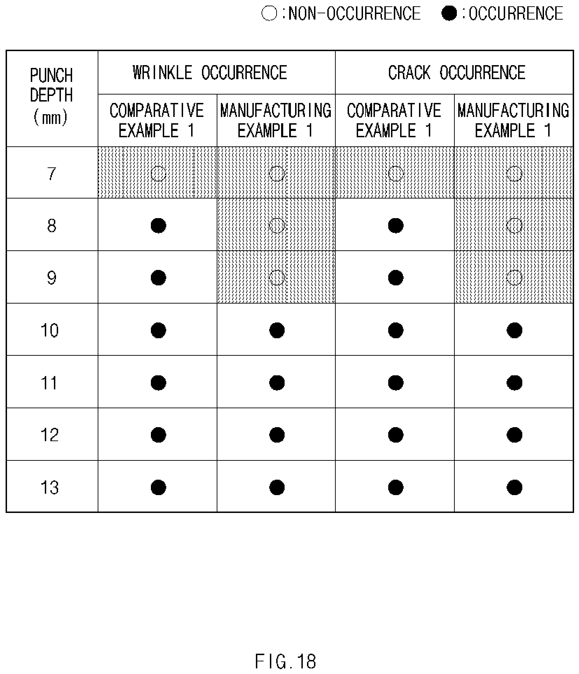

FIG. 18 is a table showing results obtained through Experimental Example 1 in a pouch forming device according to an embodiment not part of the present invention.

### Comparative Example 1

In Comparative Example 1, an accommodation part accommodating an electrode assembly is formed in a pouch sheet by using a pouch forming device comprising a lower die, a stripper, and a punch. That is, the pouch sheet is formed by using the constituents except for the vacuum unit in the pouch forming device according to the embodiment not part of the present invention.

### Manufacturing Example 1

In Manufacturing Example 1, an accommodation part accommodating an electrode assembly is formed in a pouch sheet by using a pouch forming device comprising a lower die, a punch, a stripper, and a vacuum unit. That is, the pouch sheet is formed by using the constituents of the pouch forming device according to the embodiment not part of the present invention.

Here, in Comparative Example 1 and Manufacturing Example 1, the same pouch sheet is used, and the pouch sheet is formed under the same environment. Here, the same environment has following conditions: a pressure of the stripper: 4 kg/cm², an initial descending speed of the punch: 30 mm/s, and a surface roughness of the punch: 0.1 s.

### Elongation

As results obtained by measuring whether the pouch sheet formed through Comparative Example 1 and Manufacturing Example 1 is defective, a result table as illustrated in FIG. 18 may be obtained.

Referring to the result table of FIG. 18, in Comparative Example 1, it is seen that wrinkles and cracks occur in the pouch sheet from a point at which the punch descends by 8 mm from the uppermost end of the forming groove of the lower die. Also, in Manufacturing Example, it is seen that wrinkles and cracks occur in the pouch sheet from a point at which the punch descends by 10 mm from the uppermost end of the forming groove of the lower die.

In summary, in Manufacturing Example 1, the wrinkles and the cracks occur after further descending by 2 mm when compared to Comparative Example 1. As the results of the above experiments, in Manufacturing Example 1, it is confirmed that the elongation increases when compared to Comparative Example 1.

### [Experimental Example 2]

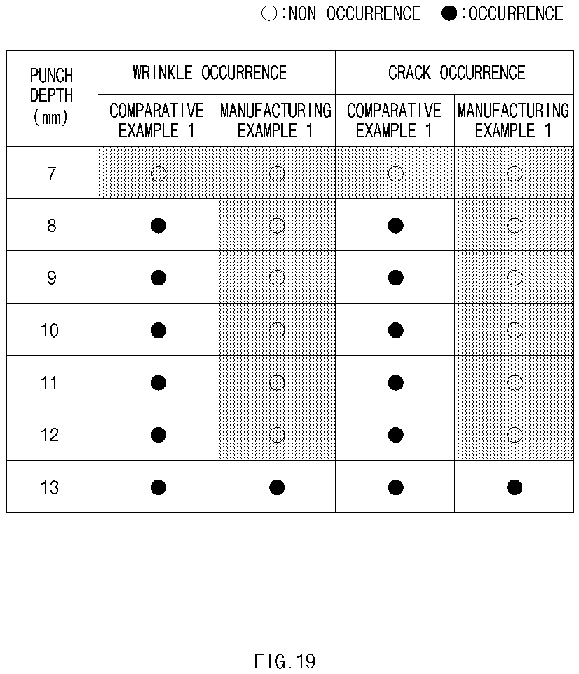

FIG. 19 is a table showing results obtained through Experimental Example 2 in a pouch forming device according to another embodiment not part of the present invention.

### Comparative Example 2

In Comparative Example 2, an accommodation part accommodating an electrode assembly is formed in a pouch sheet by using a pouch forming device comprising a lower die, a stripper, and a punch. That is, the pouch sheet is formed by using the constituents except for the vacuum unit and the control unit in the pouch forming device according to the other embodiment not part of the present invention.

### Manufacturing Example 2

In Manufacturing Example 2, an electrode assembly accommodation part is formed in a pouch sheet by using a pouch forming device comprising a lower die, a stripper, a punch, a vacuum unit, and a control unit. That is, the pouch sheet is formed by using the constituents of the pouch forming device according to the other embodiment not part of the present invention.

Here, in Comparative Example 2 and Manufacturing Example 2, the same pouch sheet is used, and the pouch sheet is formed under the same environment. Here, the same environment has following conditions: a pressure of the stripper member: 4 kg/cm², an initial descending speed of the punch: 30 mm/s, a pressure inverse proportion control rate: 95%, and a surface roughness of the punch: 0.1 s.

### Elongation

As results obtained by measuring whether the pouch sheet formed through Comparative Example 2 and Manufacturing Example 2 is defective, a result table as illustrated in FIG. 19 may be obtained.

Referring to the result table of FIG. 19, in Comparative Example 2, it is seen that wrinkles and cracks occur in the pouch sheet from a point at which the punch descends by 8 mm from the uppermost end of the forming groove of the lower die. Also, in Manufacturing Example 2, it is seen that wrinkles and cracks occur in the pouch sheet from a point at which the punch descends by 13 mm from the uppermost end of the forming groove of the lower die.

In summary, in Manufacturing Example 2, the wrinkles and the cracks occur after further descending by 5 mm when compared to Comparative Example 2. As the results of the above experiments, in Manufacturing Example 2, it is confirmed that the elongation increases when compared to Comparative Example 2.

According to the present invention, when the punch presses the pouch sheet to form the accommodation part accommodating the electrode assembly, the vacuum may be applied to the portion, at which the accommodation part is formed, of the pouch sheet to elongate the portion, thereby preventing the cracks from occurring.

Also, according to the present invention, when the pouch is formed, the pressing force of the stripper supporting the pouch sheet may gradually decrease, or the descending speed of the punch may gradually decrease to gradually increase in elongation when the pouch is formed, thereby stably forming the pouch. Particularly, when the pouch is formed, the local portion, i.e., the edge or vertex portion of the electrode assembly accommodation part formed in the pouch may be effectively prevented from being cracked.

Furthermore, the scope of protection of the present invention will be clarified by the appended claims.

## Claims

1. A pouch forming method for forming an accommodation part (11b) accommodating an electrode assembly (12) in a pouch sheet (11), the pouch forming method comprising:
a seating process of seating the pouch sheet (11) on a top surface of a lower die (110) in which a forming groove (111) is formed in an upper portion thereof;
a vacuum elongation process of elongating a lower portion of the pouch sheet (11), in which the accommodation part (11b) is formed, through vacuum; and
an accommodation part formation process of pressing the portion of the pouch sheet (11), which is elongated through the vacuum, by using a punch (251) disposed above the pouch sheet (11) in a direction in which the forming groove (111) is formed to form the accommodation part (11b),
wherein the pouch forming method further comprises a control process of controlling a stripper moving part (222), which allows a stripper (221) to vertically move, through a control unit,
wherein, in the control process, when the punch (251) is inserted into the forming groove (111) of the lower die (110) to press the pouch sheet (11), the stripper (221) allows the stripper moving part (222) to ascend so as to decrease in pressing force that presses the pouch sheet (11).

2. The pouch forming method of claim 1, wherein, in the vacuum elongation process, a space of the forming groove (111) is vacuumized through a vacuum passage (112, 113) connected to the forming groove (111) in the lower die (110) to elongate a portion of the pouch sheet (11), which faces the forming groove (111) .

3. The pouch forming method of claim 1 or 2, wherein, in the vacuum elongation process, the space of the forming groove (111) is vacuumized through a plurality of suction holes (112a, 113a) of the vacuum passage (112, 113), which are formed along a lower portion of a side surface of the forming groove (111), to elongate the forming portion (11d).

4. The pouch forming method of any one of claims 1 to 3, wherein the vacuum elongation process is performed before the accommodation part formation process.

5. The pouch forming method of any one of claims 1 to 3, wherein the vacuum elongation process and the accommodation part formation process are performed at the same time.

6. The pouch forming method of any one of claims 1 to 5, further comprising a pouch supporting process of pressing an outer portion (11c) of the accommodation part (11b) in the pouch sheet (11) through a stripper (221) disposed on an upper portion of the pouch sheet (11) to support the pouch sheet (11) on the lower die (110).

7. The pouch forming method of claim 1, wherein, in the control process, the stripper moving part (222) and a punch moving part, which allows the punch (251) to vertically move, are controlled so that the stripper (221) gradually ascends, and simultaneously, the punch (251) gradually decreases in descending speed.

## Patentansprüche

1. Beutelherstellungsverfahren zur Herstellung eines Aufnahmeteils (11b), welcher eine Elektrodenanordnung (12) in einer Beutelfolie (11) aufnimmt, wobei das Beutelherstellungsverfahren umfasst:
einen Setzungsprozess eines Setzens der Beutelfolie (11) auf einer oberen Fläche einer unteren Matrize (110), in welcher in einem oberen Abschnitt davon eine Formungsaussparung (111) gebildet ist;
einen Vakuumausdehnungsprozess eines Ausdehnens eines unteren Abschnitts der Beutelfolie (11), in welchem der Aufnahmeteil (11b) gebildet ist, durch ein Vakuum; und
einen Aufnahmeteilformungsprozess eines Drückens des Abschnitts der Beutelfolie (11), welcher ausgedehnt ist, durch das Vakuum unter Verwendung eines Stempels (251), welcher oberhalb der Beutelfolie (11) angeordnet wird, in einer Richtung, in welcher die Formungsaussparung (111) gebildet ist, um den Aufnahmeteil (11b) zu bilden,
wobei das Beutelherstellungsverfahren ferner einen Steuerungsprozess eines Steuerns eines Abstreiferbewegungsteils (222), welcher einem Abstreifer (221) ermöglicht, sich vertikal zu bewegen, durch eine Steuereinheit umfasst,
wobei in dem Steuerungsprozess, wenn der Stempel (251) in die Formungsaussparung (111) der unteren Matrize (110) eingeführt wird, um auf die Beutelfolie (11) zu drücken, der Abstreifer (221) dem Abstreiferbewegungsteil (222) ermöglicht, aufzusteigen, um eine Druckkraft abnehmen zu lassen, welche auf die Beutelfolie (11) drückt.

2. Beutelherstellungsverfahren nach Anspruch 1, wobei in dem Vakuumausdehnungsprozess ein Raum der Formungsaussparung (111) durch einen Vakuumdurchgang (112, 113) unter Vakuum gesetzt wird, welcher mit der Formungsaussparung (111) in der unteren Matrize (110) verbunden ist, um einen Abschnitt der Beutelfolie (11) auszudehnen, welcher der Formungsaussparung (111) zugewandt ist.

3. Beutelherstellungsverfahren nach Anspruch 1 oder 2, wobei in dem Vakuumausdehnungsprozess der Raum der Formungsaussparung (111) durch eine Mehrzahl von Sauglöchern (112a, 113a) des Vakuumdurchgangs (112, 113) unter Vakuum gesetzt wird, welche entlang eines unteren Abschnitts einer Seitenfläche der Formungsaussparung (111) gebildet sind, um den Formungsabschnitt (11d) auszudehnen.

4. Beutelherstellungsverfahren nach einem der Ansprüche 1 bis 3, wobei der Vakuumausdehnungsprozess vor dem Aufnahmeteilformungsprozess durchgeführt wird.

5. Beutelherstellungsverfahren nach einem der Ansprüche 1 bis 3, wobei der Vakuumausdehnungsprozess und der Aufnahmeteilformungsprozess zu der gleichen Zeit durchgeführt werden.

6. Beutelherstellungsverfahren nach einem der Ansprüche 1 bis 5, ferner umfassend einen Beutelhalterungsprozess eines Drückens auf einen äußeren Abschnitt (11c) des Aufnahmeteils (11b) in der Beutelfolie (11) durch einen Abstreifer (221), welcher an einem oberen Abschnitt der Beutelfolie (11) angeordnet ist, um die Beutelfolie (11) an der unteren Matrize (110) zu haltern.

7. Beutelherstellungsverfahren nach Anspruch 1, wobei in dem Steuerungsprozess der Abstreiferbewegungsteil (222) und ein Stempelbewegungsteil, welcher dem Stempel (251) ermöglicht, sich vertikal zu bewegen, derart gesteuert werden, dass der Abstreifer (221) allmählich aufsteigt und gleichzeitig der Stempel (251) in einer Absenkgeschwindigkeit allmählich absinkt.

## Revendications

1. Procédé de formage d'étui pour former une partie de logement (11b) logeant un ensemble d'électrodes (12) dans une feuille d'étui (11), le procédé de formage d'étui comprenant :
un processus d'assise consistant à asseoir la feuille d'étui (11) sur une surface de dessus d'une matrice inférieure (110) dans laquelle une rainure de formage (111) est formée dans une portion supérieure de celle-ci ;
un processus d'allongement par le vide consistant à allonger une portion inférieure de la feuille d'étui (11), dans lequel la partie de logement (11b) est formée, par le biais d'un vide ; et
un processus de formation de partie de logement consistant à appuyer sur la portion de la feuille d'étui (11), qui est allongée par le biais du vide, en utilisant un poinçon (251) disposé au-dessus de la feuille d'étui (11) dans une direction dans laquelle la rainure de formage (111) est formée pour former la partie de logement (11b),
dans lequel le procédé de formage d'étui comprend en outre un processus de commande consistant à commander une partie de déplacement de dévêtisseur (222), qui permet à un dévêtisseur (221) de se déplacer verticalement, par le biais d'une unité de commande,
dans lequel, dans le processus de commande, lorsque le poinçon (251) est inséré dans la rainure de formage (111) de la matrice inférieure (110) pour appuyer sur la feuille d'étui (11), le dévêtisseur (221) permet à la partie de déplacement de dévêtisseur (222) de monter de façon à diminuer la force d'appui qui appuie sur la feuille d'étui (11).

2. Procédé de formage d'étui selon la revendication 1, dans lequel, dans le processus d'allongement par le vide, un espace de la rainure de formage (111) est mis sous vide par le biais d'un passage sous vide (112, 113) relié à la rainure de formage (111) dans la matrice inférieure (110) pour allonger une portion de la feuille d'étui (11), qui est face à la rainure de formage (111).

3. Procédé de formage d'étui selon la revendication 1 ou 2, dans lequel, dans le processus d'allongement par le vide, l'espace de la rainure de formage (111) est mis sous vide par le biais d'une pluralité de trous d'aspiration (112a, 113a) du passage sous vide (112, 113), qui sont formés le long d'une portion inférieure d'une surface de côté de la rainure de formage (111), pour allonger la portion de formage (11d).

4. Procédé de formage d'étui selon l'une quelconque des revendications 1 à 3, dans lequel le processus d'allongement par le vide est réalisé avant le processus de formation de partie de logement.

5. Procédé de formage d'étui selon l'une quelconque des revendications 1 à 3, dans lequel le processus d'allongement par le vide et le processus de formation de partie de logement sont réalisés en même temps.

6. Procédé de formage d'étui selon l'une quelconque des revendications 1 à 5, comprenant en outre un processus de support d'étui consistant à appuyer sur une portion externe (11c) de la partie de logement (11b) dans la feuille d'étui (11) par le biais d'un dévêtisseur (221) disposé sur une portion supérieure de la feuille d'étui (11) pour supporter la feuille d'étui (11) sur la matrice inférieure (110).

7. Procédé de formage d'étui selon la revendication 1, dans lequel, dans le processus de commande, la partie de déplacement de dévêtisseur (222) et une partie de déplacement de poinçon, qui permet au poinçon (251) de se déplacer verticalement, sont commandées de sorte que le dévêtisseur (221) monte progressivement, et simultanément, le poinçon (251) diminue progressivement la vitesse de descente.
